# EUROPÄISCHE PATENTSCHRIFT

(11) **EP 2 770 801 B1**
(45) Veröffentlichungstag und Bekanntmachung des Hinweises auf die Patenterteilung: **12.04.2017**
(21) Anmeldenummer: 14154170.6
(22) Anmeldetag: 06.02.2014
(51) Int. Cl.: H05B 6/12

(54) **Hausgeräteinduktionsheizvorrichtung**
Induction heating device for household appliances
Dispositif domestique de chauffage par induction

(30) Priorität: 20.02.2013 ES 201330228
(43) Veröffentlichungstag der Anmeldung: 27.08.2014
(73) Patentinhaber: BSH Hausgeräte GmbH, 81739 München (DE)
(72) Erfinder: Aranda Vazquez, Sandra, 50018 Zaragoza (ES); Diez Esteban, Cristina, 50017 Zaragoza (ES); Hernandez Blasco, Pablo Jesus, 50410 Cuarte de Huerva (Zaragoza) (ES); Lope Moratilla, Ignacio, 50010 Zaragoza (ES); Gomez Damaso, Martin, 20012 Zaragoza (ES); Moya Albertin, Maria Elena, 50002 Zaragoza (ES)

(56) Entgegenhaltungen:
- WO-A1-2012/108136
- DE-A1-102005 005 527
- JP-A- 2003 197 358
- JP-A- 2005 302 406
- US-A- 4 947 464

## Beschreibung

Die Erfindung geht aus von einer Hausgeräteinduktionsheizvorrichtung nach dem Oberbegriff des Anspruchs 1.

Es sind Hausgeräteinduktionsheizvorrichtungen bekannt, die einen Induktionsheizleiter aufweisen, der einen inneren und einen äußeren Spulenabschnitt ausbildet, wobei beide Spulenabschnitte dicht gewickelt sind und auf einem flachen Spulenträger angeordnet sind, auf den sie nach einem Wickelvorgang auf einer separaten Vorrichtung übertragen wurden.

Die Dokumenten US-A-4 947 464, JP-A-2003 197358, WO-A1-2012/108136, JP-A-2005 302406 und DE-A1-10 20050005527 offenbaren Kochfeldinduktionsheizvorrichtungen nach dem Stand der Technik.

Die Aufgabe der Erfindung besteht insbesondere darin, eine gattungsgemäße Vorrichtung mit verbesserten Eigenschaften hinsichtlich geringer Kosten, einer hohen Qualität und/oder einer einfachen Produktion bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können. Die Erfindung geht aus von einer Hausgeräteinduktionsheizvorrichtung, insbesondere einer Kochfeldinduktionsheizvorrichtung, mit zumindest einer Induktionsheizleitung, die zumindest einen dichtgewickelten inneren Spulenabschnitt und zumindest einen äußeren Spulenabschnitt ausbildet, und einem Spulenträger, der dazu vorgesehen ist, die Induktionsheizleitung zu tragen.

Es wird vorgeschlagen, dass der Spulenträger zumindest einen inneren Trägerkern aufweist, um den die Induktionsheizleitung gewickelt ist, um die innere Spule zu bilden. Unter einer "Induktionsheizleitung" soll insbesondere eine elektrische Leitung verstanden werden, die dazu vorgesehen ist, einen elektrischen Strom zu führen, der dazu vorgesehen ist, in einem geeigneten Heizmittel Induktionseffekte hervorzurufen. Vorzugsweise ist die Induktionsheizleitung dazu vorgesehen, zumindest in einem Betriebszustand von hochfrequentem Wechselstrom, insbesondere einem Wechselstrom mit einer Frequenz von zumindest 1 kHz, insbesondere zumindest 3 kHz, vorteilhaft zumindest 10 kHz, vorzugsweise zumindest 20 kHz, insbesondere maximal 100 kHz, insbesondere mit einer Stromstärke von zumindest 0,5 A, insbesondere zumindest 1 A, vorteilhaft zumindest 3 A, vorzugsweise zumindest 10 A, durchflossen zu werden.

Vorteilhaft ist die Induktionsheizleitung von einer Litzenleitung, mit vorteilhaft gegeneinander isolierten Einzeladern, gebildet, um eine hohe Effizienz zu erreichen. Vorzugsweise ist die Induktionsheizleitung als Induktivität, insbesondere als Spule, vorteilhaft als Flachspule, vorzugsweise zumindest im Wesentlichen in Form einer Kreisscheibe, alternativ in Form eines Ovals oder eines Rechtecks, ausgebildet. Insbesondere weist die Induktionsheizleitung, insbesondere mit einem gekoppelten Heizmittel, eine Induktivität von zumindest 0,1 µH, insbesondere zumindest 0,3 µH, vorteilhaft zumindest 1 µH, auf. Insbesondere weist die Induktionsheizleitung, insbesondere ohne ein gekoppeltes Heizmittel, eine Induktivität von maximal 100 mH, insbesondere maximal 10 mH, vorteilhaft maximal 1 mH, auf. Insbesondere ist die Induktionsheizleitung in zumindest einem Betriebszustand dazu vorgesehen, eine durch den hochfrequenten Wechselstrom bereitgestellte Heizleistung von zumindest 100 W, insbesondere zumindest 300 W, vorteilhaft zumindest 1000 W, vorzugsweise zumindest 2000 W, in ein magnetisches Wechselfeld zu wandeln, das wiederum in einem Heizmittel, insbesondere einem Gargeschirr, vorteilhaft einem Gargeschirrboden, alternativ einem Garröhrenheizkörper, durch Wirbelstromeffekte und/oder Ummagnetisierungseffekte in Wärme umgewandelt zu werden. Unter einem "dichtgewickelten Spulenabschnitt" soll insbesondere ein Abschnitt der Induktionsheizleitung verstanden werden, dessen Windungen, insbesondere dessen aufeinanderfolgende Windungen, einen Abstand zueinander aufweisen, der kleiner ist als 0,5 mm, insbesondere kleiner ist als 0,3 mm, vorteilhaft kleiner ist als 0,1 mm. Vorteilhaft liegen unterschiedliche, insbesondere aufeinanderfolgende, Windungen des dichtgewickelten Spulenabschnitts aneinander an. Insbesondere sind die Windungen eines Spulenabschnitts in einer Ebene angeordnet. Alternativ ist es denkbar, dass die Windungen eines Spulenabschnitts in mehreren Ebenen angeordnet sind. Vorteilhaft weist ein Spulenabschnitt eine Anzahl von zumindest drei, insbesondere zumindest fünf, vorteilhaft zumindest zehn, Windungen auf.

Erfindungsgemäß sind der innere Spulenabschnitt und der äußere Spulenabschnitt durch einen Übergangsbereich, der insbesondere eine Breite von zumindest 0,5 cm, insbesondere zumindest 1 cm, vorteilhaft zumindest 2 cm, aufweist, voneinander getrennt, wobei in dem Übergangsbereich vorteilhaft maximal eine, insbesondere maximal eine halbe, vorzugsweise maximal eine viertel, Windung der Induktionsheizleitung liegt. Insbesondere ist der äußere Spulenabschnitt von Windungen gebildet, die Windungen des inneren Spulenabschnitts umschließen. Insbesondere sind die Windungen der unterschiedlichen Spulenabschnitte in einer gleichen Ebene angeordnet. Unter einer "Windung" der Induktionsheizleitung soll insbesondere ein Abschnitt der Induktionsheizleitung verstanden werden, der bezüglich einer Achse, die vorteilhaft einen Mittelpunkt des Spulenträgers schneidet, jeden Winkelteilbereich um die Achse belegt. Unter einem "Spulenträger" soll insbesondere eine Einheit verstanden werden, die dazu vorgesehen ist, die Induktionsheizleitung in Form und/oder Position zu halten. Insbesondere ist der Spulenträger von einem isolierenden, vorteilhaft zumindest teilweise flexiblen, Material, vorteilhaft zumindest teilweise von einem Kunststoff, alternativ und/oder zusätzlich zumindest teilweise von einer Keramik und/oder einem Mineral, gebildet. Insbesondere dient die Trägereinheit zu einem Tragen einer Bündelungseinheit, die dazu vorgesehen ist, zumindest an einer Seite der Induktionsheizleitung, die vorzugsweise von einem Heizmittel abgewandt ist, Magnetfeldlinien zu bündeln. Insbesondere dient die Trägereinheit zu einer Befestigung einer Abschirmeinheit, die dazu vorgesehen ist, zumindest magnetische Streufelder, die insbesondere von der Bündelungseinheit nicht erfasst sind, abzufangen. Insbesondere weist der Spulenträger zumindest ein Haltemittel zur Befestigung eines Temperatursensors auf. Unter "vorgesehen" soll insbesondere speziell ausgeformt, ausgelegt und/oder ausgestattet verstanden werden. Darunter, dass ein Objekt zu einer Funktion vorgesehen ist, soll insbesondere verstanden werden, dass das Objekt die Funktion in zumindest einem Betriebszustand erfüllt. Unter einem "Trägerkern" soll insbesondere ein Teil der Trägereinheit verstanden werden, der dazu vorgesehen ist, zumindest eine Form einer innersten Windung des Spulenabschnitts zu beeinflussen. Insbesondere ist der Trägerkern dazu vorgesehen, einer radialen Kraft, mit der die Windung insbesondere auf den Trägerkern wirkt, entgegenzuwirken. Insbesondere ist der Trägerkern ringförmig ausgebildet. Insbesondere weist der Trägerkern zumindest eine spiralförmig verlaufende Außenseite auf, wobei insbesondere ein Spiralversatz maximal 1 mm von einer Dicke der Induktionsheizleitung abweicht, insbesondere kleiner ist als die Dicke der Induktionsheizleitung. Insbesondere ragt der Trägerkern über einer, insbesondere teilweise unterbrochenen, Ebene der Trägereinheit, auf der der entsprechende Spulenabschnitt angeordnet ist, um eine Distanz hinaus, die insbesondere maximal 1 mm, vorteilhaft maximal 0,5 mm, von der Dicke der Induktionsheizleitung abweicht.

Durch die erfindungsgemäße Ausgestaltung kann insbesondere eine einfache Konstruktion erreicht werden. Insbesondere können Produktionskosten gespart werden. In dem die Induktionsheizleitung auf den Spulenträger aufgewickelt wird, kann insbesondere kann auf einen fehleranfälligen Produktionsschritt, bei dem eine, auf einer separaten Wickelvorrichtung gewickelte Spule auf einen Spulenträger übertragen wird, verzichtet werden. Insbesondere kann durch den Trägerkern eine definierte Position des inneren Spulenabschnitts erreicht werden.

Vorteilhaft wird vorgeschlagen, dass der Spulenträger zumindest einen äußeren Trägerkern aufweist, um den die Induktionsheizleitung gewickelt ist, um den äußeren Spulenabschnitt zu bilden. Insbesondere weist der äußere Spulenkern zumindest eine Übergangsöffnung auf, durch die die Induktionsheizleitung bei einem Übergang von dem inneren zum äußeren Spulenteilbereich geführt ist. Es kann insbesondere ein einfacher und/oder preiswerter Produktionsprozess erreicht werden. Insbesondere kann eine definierte Position des äußeren Spulenabschnitts erreicht werden.

Weiterhin wird vorgeschlagen, dass der äußere Spulenabschnitt dicht gewickelt ist. Es kann insbesondere eine einfache Produktion erreicht werden. Insbesondere kann eine hohe Windungsdichte und somit eine hohe Magnetfelddichte erreicht werden. Insbesondere können kleine Induktoren mit hoher Leistungsfähigkeit erreicht werden. Alternativ ist es denkbar, dass der äußere Spulenabschnitt von zueinander separat angeordneten, insbesondere um zumindest 0,5 mm, insbesondere zumindest 1 mm, zueinander beabstandeten, insbesondere durch eine Führungsnut des Spulenträgers geführten, Windungen gebildet ist.

Erfindungsgemäß wird vorgeschlagen, dass der Spulenträger von zumindest zwei Teilträgern gebildet ist. Insbesondere sind die Teilträger von einem gleichen Material gebildet. Insbesondere weisen die Teilträger Formschlussmittel auf, die dazu vorgesehen sind, ein Zusammenfügen der Teilträger, in insbesondere eindeutiger Weise, erlauben und/oder erleichtern. Insbesondere ist der zweite Teilträger ringartig ausgebildet und der erste Teilträger ist dazu vorgesehen, in dem Loch des zweiten Teilträgers angeordnet zu werden. Es kann insbesondere eine einfache Produktion erreicht werden. Wird der Spulenträger von Teilträgern unterschiedlichen Materials gebildet, kann insbesondere eine verbesserte Steifigkeit erreicht werden.

Weiterhin wird vorgeschlagen, dass der innere Spulenabschnitt und der äußere Spulenabschnitt auf unterschiedlichen Teilträgern angeordnet sind. Insbesondere weist der erste Teilträger den inneren Trägerkern und der zweite Teilträger den äußeren Trägerkern auf. Insbesondere ist der erste Teilträger dazu vorgesehen, den inneren Spulenabschnitt zu tragen und der zweite Teilträger dazu vorgesehen, den äußeren Spulenabschnitt zu tragen. Es kann insbesondere eine einfache Produktion, insbesondere ein einfacher Wickelprozess, erreicht werden, indem der zweite Teilträger erst nach einem Bewickeln des ersten Teilträgers montiert wird, so dass der zweite Teilträger bei dem Wickelvorgang nicht im Weg ist.

Vorteilhaft wird vorgeschlagen, dass leitende Bestandteile der Induktionsheizleitung zumindest im Wesentlichen, insbesondere zu mindestens 50 %, vorteilhaft zu mindestens 80 %, besonders vorteilhaft zu mindestens 95 %, vorzugsweise komplett, aus Aluminium gebildet sind. Insbesondere wird auf eine additive Isolation der Einzeladern einer Litzenleitung gegeneinander, insbesondere durch einen Kunststoff und/oder ein Harz, verzichtet, da die Einzeladern aufgrund einer Selbstpassivierung des Aluminiums eine natürliche Isolation aufweisen. Insbesondere ist es denkbar, dass die natürliche Oxidationsschicht durch eine elektrolytische Oxidation verstärkt ist. Die Erfindung ist besonders vorteilhaft bei Verwendung von Aluminium als Leiter der Induktionsheizleitung einzusetzen, da in diesem Fall ein erhöhter Platzbedarf, insbesondere gegenüber Kupferleitungen, besteht und eine separate Windungsführung, insbesondere im inneren Spulenabschnitt, lediglich ungenügend Platz bereitstellt.

Ferner wird vorgeschlagen, dass die Induktionsheizleitung zumindest im Bereich des inneren Spulenabschnitts, vorteilhaft zumindest auch im Bereich des äußeren Spulenabschnitts, zumindest abschnittsweise mittels eines Klebstoffs, insbesondere eines Silikonklebers, mit dem Spulenträger verbunden ist. Insbesondere ist der Klebstoff von einer Seite her aufgetragen, die von dem inneren bzw. äußeren Spulenabschnitt gesehen hinter dem Spulenträger liegt. Insbesondere weist der Spulenträger Ausnehmungen, insbesondere Löcher, auf, in die der Klebstoff, insbesondere von bezüglich der Induktionsheizleitung abgewandter Seite, eingebracht ist, um den Spulenträger mit der Induktionsheizleitung zu verbinden. Insbesondere ist der Klebstoff gleichzeitig zu einer Fixierung der Bündelungseinheit an dem Spulenträger vorgesehen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein erfindungsgemäßes Kochfeld in einer schematischen Ansicht von oben,
- Fig. 2: einen ersten Teilträger eines Spulenträgers,
- Fig. 3: einen inneren Spulenabschnitt, der auf den ersten Teilträger aufgewickelt ist,
- Fig. 4: einen zweiten Teilträger eines Spulenträgers, der an den ersten Teilträger angefügt wird,
- Fig. 5: die zusammengefügten Teilträger des Spulenträgers in einer Ansicht von unten,
- Fig. 6: den Spulenträger mit aufgewickelten inneren und äußeren Spulenabschnitten in einer perspektivischen Ansicht von oben,
- Fig. 7: den Spulenträger mit aufgewickelten inneren und äußeren Spulenabschnitten in einer Ansicht von unten, wobei ein Teil einer Bündelungseinheit montiert wird und
- Fig. 8: den Spulenträger mit fertig montierter Induktionsheizleitung und fertig montierter Bündelungseinheit.

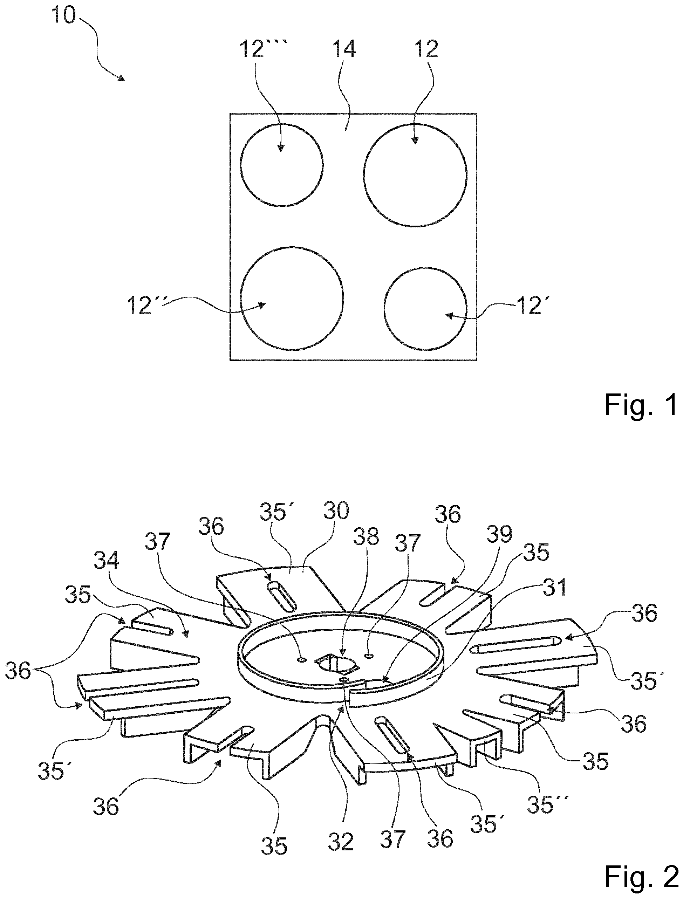

Figur 1 zeigt ein als Induktionskochfeld ausgebildetes Hausgerät 10 mit erfindungsgemäßen, als Kochfeldinduktionsheizvorrichtung ausgebildeten Hausgeräteinduktionsheizvorrichtungen 12, 12', 12", 12"'. Die Hausgeräteinduktionsheizvorrichtungen 12, 12', 12", 12'" sind an einer Unterseite einer Kochfeldplatte 14 angeordnet und bilden unabhängige Kochzonen. Die Kochfeldplatte 14 ist dazu vorgesehen, Gargeschirr zu einer Erwärmung durch die Hausgeräteinduktionsheizvorrichtungen 12, 12', 12", 12"' zu tragen. Die Hausgeräteinduktionsheizvorrichtungen 12, 12', 12", 12"' weisen unterschiedliche Größen auf, wobei die Erfindung vorteilhaft zumindest bei großen Hausgeräteinduktionsheizvorrichtungen 12, 12", insbesondere mit Durchmessern größer als 20 cm, insbesondere größer als 25 cm, zum Einsatz kommt, jedoch ein Einsatz auch bei kleinen Durchmessern denkbar ist.

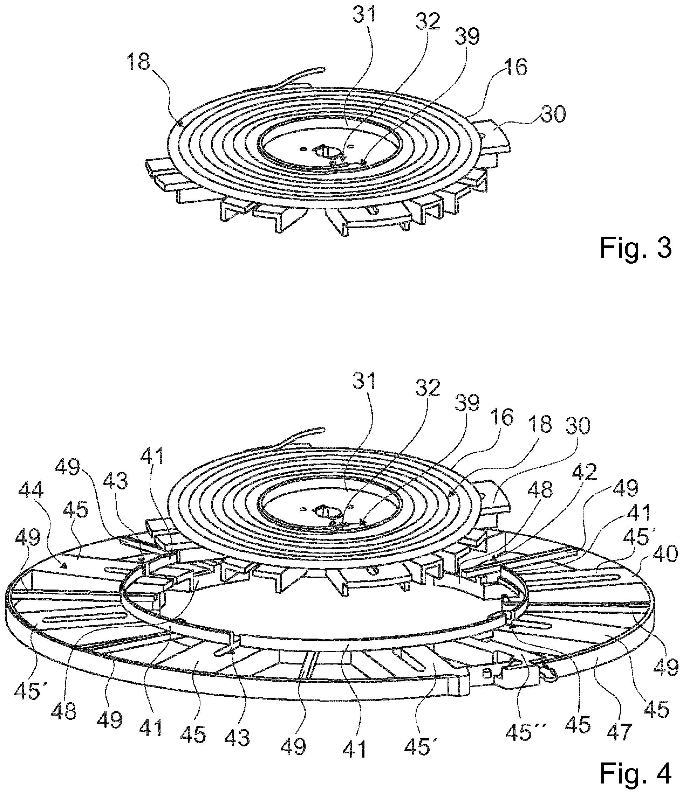

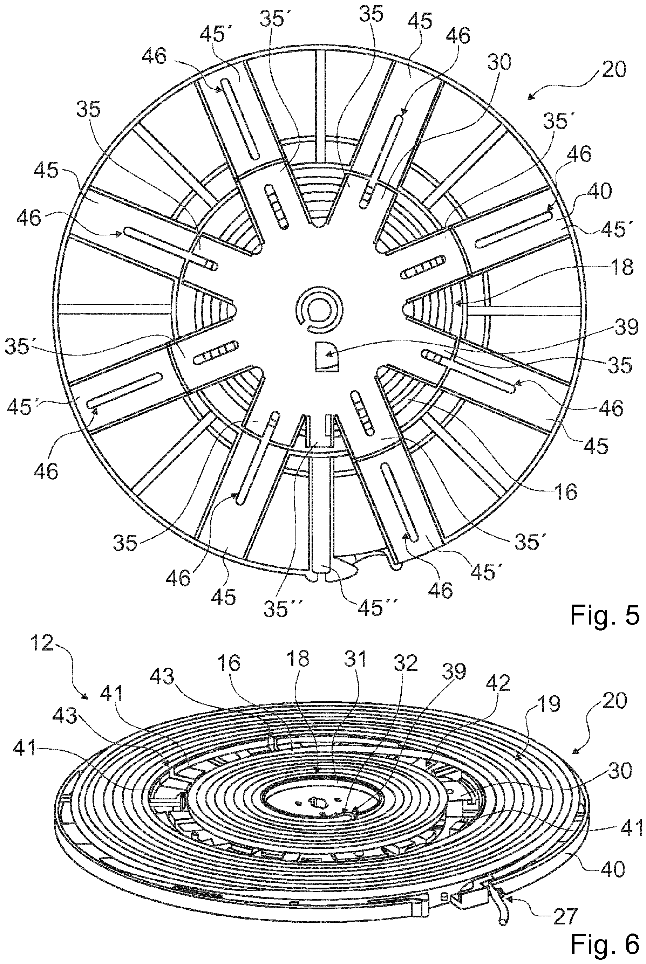

Die Figuren 2 bis 8 zeigen Schritt für Schritt einen Zusammenbau einer Hausgeräteinduktionsheizvorrichtung 12, 12', 12", 12" am Beispiel der Hausgeräteinduktionsheizvorrichtung 12. Die fertige Hausgeräteinduktionsheizvorrichtung 12 weist eine Induktionsheizleitung 16 auf (Figur 6). Die Induktionsheizleitung 16 bildet einen dichtgewickelten inneren Spulenabschnitt 18 und einen dichtgewickelten äußeren Spulenabschnitt 19 aus. Die Induktionsheizleitung 16 bildet eine kreisförmige Spule aus und ist dazu vorgesehen, eine kreisförmige Heizzone zu beheizen. Weiterhin weist die Hausgeräteinduktionsheizvorrichtung 12 einen Spulenträger 20 auf, der dazu vorgesehen ist, die Induktionsheizleitung 16 zu tragen. Der Spulenträger 20 ist von zwei Teilträgern 30, 40, gebildet, wobei ein erster der Teilträger 30 in einem ringartigen zweiten der Teilträger 40 angeordnet ist. Der innere Spulenabschnitt 18 und der äußere Spulenabschnitt 19 sind auf unterschiedlichen Teilträgern 30, 40 angeordnet. Der erste Teilträger 30 trägt den inneren Spulenabschnitt 18. Der zweite Teilträger 40 trägt den äußeren Spulenabschnitt 19. Der Spulenträger 20 weist einen inneren Trägerkern 31 auf, um den die Induktionsheizleitung 16 gewickelt ist, um den inneren Spulenabschnitt 18 zu bilden. Der innere Trägerkern 31 ist aus dem ersten Teilträger 30 herausgebildet. Der Spulenträger 20 weist einen äußeren Trägerkern 41 auf, um den die Induktionsheizleitung 16 gewickelt ist, um den äußeren Spulenabschnitt 19 zu bilden. Der äußere Trägerkern 41 ist aus dem zweiten Teilträger 40 herausgebildet. Die Trägerkerne 31, 41 sind jeweils spiralförmig ausgebildet. Die Trägerkerne 31, 41 weisen jeweils eine Eintrittsöffnung 32, 42 auf, durch die die Induktionsheizleitung 16 geführt ist. Der äußere Trägerkern 41 weist weiterhin abschnittsweise Unterbrechungen 43 auf, die einer Materialersparnis und einem einfachen Fertigungsprozess dienen. Einzeldrähte der als Litzenleitung ausgebildeten Induktionsheizleitung 16 sind aus Aluminium gebildet.

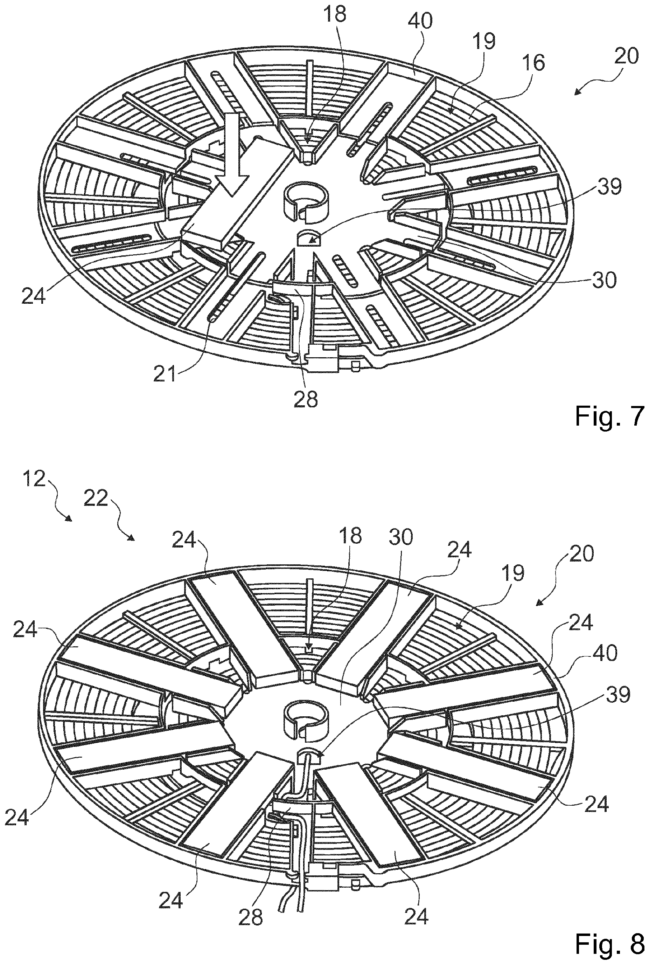

Der erste Teilträger 30 ist von einem Kunststoff gebildet. Der erste Teilträger 30 weist eine Trägerfläche 34 auf, die senkrecht zu dem inneren Trägerkern 31 ausgerichtet ist. Die Trägerfläche 34 wird von speichenartig von einem Zentrum des ersten Teilträgers 30 ausgehenden Ausformungen 35, 35', 35" gebildet. Die Ausformungen 35, 35', 35" weisen unterschiedliche Längen auf. Die Ausformungen 35, 35', 35' weisen jeweils auf einer der Trägerfläche 34 abgewandten Seite ein U-Profil auf. Der erste Teilträger 30 weist acht Ausformungen 35, 35' auf, die in einem fertig montierten Zustand Bündelungselemente 24 einer Bündelungseinheit 22 aufnehmen (Figur 8). Die Bündelungselemente 24 sind von Ferrit gebildet. Die Ausformungen 35, 35', die die Bündelungselemente 24 aufnehmen, sind mit gleichem Winkelabstand zueinander angeordnet. Eine weitere der Ausformung 35" ist schmaler als die übrigen Ausformungen 35, 35' ausgebildet und liegt zwischen zwei Ausformungen 35, 35'. Diese weitere Ausformung 35" ist dazu vorgesehen, in einem montierten Zustand die Induktionsheizleitung 16 an einer Unterseite des Spulenträgers 20 von außen zu einem Loch 39 zu führen. Die Induktionsheizleitung 16 ist durch das Loch 39 zur Eintrittsöffnung 32 des inneren Trägerkerns 31 und somit zur innersten Windung des inneren Spulenabschnitts 18 geführt (Figur 8).

Der zweite Teilträger 40 ist von einem gleichen Kunststoff gebildet, wie der erste Teilträger 30. Der zweite Teilträger 40 weist eine Trägerfläche 44 auf. Die Trägerfläche 44 ist von den Oberseiten von speichenartigen Ausformungen 45, 45', 45" gebildet. Die Ausformungen 45, 45', 45" weisen jeweils ein U-Profil auf. Die Ausformungen 45, 45', 45" sind an einer radialen Außenseite über einen hohlzylinderartigen Ring 47 miteinander verbunden. In Zwischenräumen zwischen den Ausformungen 45, 45', 45" an radialen Innenseiten der Ausformungen 45, 45', 45" sind Ringabschnitte 48 angeordnet, die die Ausformungen 45, 45', 45" miteinander verbinden. Vier der Ausformungen 45' des zweiten Teilträgers 40 weisen an ihrer Innenseite als Einschnitte ausgebildete Formschlussmittel auf, in die die längeren Ausformungen 35' des ersten Teilträgers 30 eingreifen. In einem montierten Zustand sind die Teilträger 30, 40 in Umfangsrichtung durch die Ausgestaltung der speichenartigen Ausformungen 35, 35', 45, 45' formschlüssig miteinander verbunden.

Weiterhin weist der zweite Teilträger 40 Verstärkungsstreben 49 auf, die radial von Mitten der Ringabschnitte 48 ausgehend bis zu dem Ring 47 reichen und zwischen den Ausformungen 45, 45' angeordnet sind. Der innere Trägerkern 41 sorgt für ein zusätzliche Verbindung und Verstärkung der Ausformungen 45, 45', 45" miteinander und den Verstärkungsstreben 49. Der zweite Teilträger 40 weist acht Ausformungen 45, 45' auf, die in einem fertig montierten Zustand Bündelungselemente 24 der Bündelungseinheit 22 aufnehmen (Figur 8). Die Ausformungen 45, 45', die die Bündelungselemente 24 aufnehmen, sind mit gleichem Winkelabstand zueinander angeordnet. Jedes der Bündelungselemente 24 ist dazu vorgesehen, gleichzeitig eine Ausformung 45, 45' des zweiten Teilträgers 40 und eine Ausformung 35, 35' des ersten Teilträgers 30 auszufüllen. Eine weitere der Ausformung 45" ist schmaler als die übrigen Ausformungen 45, 45' ausgebildet und liegt zwischen zwei Ausformungen 45, 45'. Diese weitere Ausformung 45" ist dazu vorgesehen, in einem montierten Zustand die Induktionsheizleitung 16 an einer Unterseite des Spulenträgers 20 von außen zu der weiteren Ausformung 35" des ersten Teilträgers 30 zu führen.

In den speichenförmigen Ausformungen 35, 35', 45, 45' sind jeweils Langlöcher 36, 46 angeordnet. Die Langlöcher 36, 46 erstrecken sich jeweils in radialer Richtung. Die Langlöcher 36, 46 weisen jeweils unterschiedliche Längen und Abstände zu einem Zentrum des Spulenträgers 20 auf. Langlöcher 36, 46 unterschiedlicher Teilträger 30, 40 sind teilweise so ausgebildet, dass sie sich gegenseitig fortsetzen. Der innere Spulenabschnitt 18 ist durch diese Langlöcher 36 von unten her abschnittsweise mittels eines als Silikonkleber ausgebildeten Klebstoffs 21 an dem ersten Teilträger 30 und somit dem Spulenträger 20 fixiert (Figur 7). Der äußere Spulenabschnitt 19 ist durch diese Langlöcher 46 von unten her abschnittsweise mittels des als Silikonkleber ausgebildeten Klebstoffs 21 an dem zweiten Teilträger 40 und somit dem Spulenträger 20 fixiert. Die Bündelungselemente 24 sind ebenfalls durch den Klebstoff 21 mit dem Spulenträger 20 verbunden. Positionen der Unterbrechungen 43 stimmen jeweils mit Positionen überein, an denen Langlöcher 46 den äußeren Trägerkern 41 schneiden.

Bei einer Herstellung der Hausgeräteinduktionsheizvorrichtung 12 wird der erste Teilträger 30 mittels Befestigungspunkten 37 mit einer Rotationsvorrichtung verbunden. Die Induktionsheizleitung 16 wird durch die Eintrittsöffnung 32 des inneren Trägerkerns 31 geführt, wobei ein inneres Ende der Induktionsheizleitung 16 innerhalb eines von dem inneren Trägerkern 31 umgebenen Teilbereichs vorübergehend angeordnet wird. Durch eine Rotation der Rotationsvorrichtung wird nun der erste Teilträger 30 in eine Rotationsbewegung versetzt und die Induktionsheizleitung 16 wickelt sich um den inneren Trägerkern 31 auf. Nach einer vorbestimmten Anzahl an Windungen wird eine Drehbewegung gestoppt. Anschließend wird der zweite Teilträger 40 an den ersten Teilträger 30 angesetzt. Hierbei wird auf eine korrekte Ausrichtung der speichenartigen Ausformungen 35, 35', 45, 45', vor allem der weiteren Ausformungen 35", 45", die die Induktionsheizleitung 16 zum Zentrum des Spulenträgers 20 führen, geachtet. Die Induktionsheizleitung 16 wird durch die Eintrittsöffnung 42 des äußeren Trägerkerns 41 geführt. Anschließend wird der Spulenträger 20 erneut in Rotation versetzt, wodurch sich die Induktionsheizleitung 16 auf den zweiten Teilträger 40, um den äußeren Trägerkern 41 aufwickelt. Die Induktionsheizleitung 16 wird mittels einer am Rand des zweiten Teilträgers 40 angeordneten Klemmstelle 27 fixiert. Die Klemmstelle 27 dient gleichzeitig als Zugentlastung für die Induktionsheizleitung 16.

Anschließend wird in die Langlöcher 36, 46 von einer der Induktionsheizleitung 16 abgewandten Seite des Spulenträgers 20 her als Silikonkleber ausgebildeter Klebstoff 21 eingebracht und die Bündelungselemente 24 werden in die Ausformungen 35, 35', 45, 45' eingeklebt. Die Bündelungselemente 24 erstrecken sich jeweils von einer äußersten bis zu einer innersten Windung der Induktionsheizleitung 16. Anschließend wird das vorrübergehend im Inneren des inneren Trägerkerns 31 angeordnete Ende der Induktionsheizleitung 16 durch das Loch 39 geführt und an einer Unterseite des Spulenträgers 20 in den weiteren Ausformungen 35", 45" zu einem äußeren Rand des Spulenträgers 20 geführt. An einem inneren Ende der weiteren Ausformung 45" des zweiten Teilträgers 40 ist eine Sperrwand 28 angeordnet (Figur 8). Die Induktionsheizleitung 16 wird um diese herum geführt. Die Sperrwand 28 dient einer Klemmung und einer Zugentlastung der Induktionsheizleitung 16.

Der Spulenträger 20 weist eine Sensoraufnahme 38 auf. Die Sensoraufnahme 38 ist in einer Mitte des ersten Teilträgers 30 angeordnet und ist dazu vorgesehen, einen Temperatursensor aufzunehmen. Nach Montage des Temperatursensors wird eine elektrische Verbindung des Sensors ebenfalls über die weiteren Ausformungen 35", 45" nach außen geführt.

In alternativen Ausgestaltungen der Erfindung ist es denkbar, dass ein einstückiger Spulenträger zum Einsatz kommt. Ebenso ist es denkbar, dass unterschiedliche Teilträger jeweils mit separaten Bündelungselementen ausgestattet sind. Insbesondere bei sehr großen Hausgeräteinduktionsheizvorrichtungen ist es denkbar, dass ein Spulenträger von mehr als zwei, insbesondere drei oder gar vier Teilträgern gebildet ist und eine Induktionsheizleitung vorteilhaft ebenso viele Spulenabschnitte aufweist, die jeweils auf einem der Teilträger angeordnet sind. Weiterhin ist es denkbar, dass eine Induktionsheizleitung zu einer rechteckigen oder ovalen Form gewunden ist, wobei eine entsprechende Anpassung einer Form des Spulenträgers und/oder der Teilträger stattfindet. Ferner ist es denkbar, dass die Wicklung der Induktionsheizleitung von Hand statt mit einer Rotationsvorrichtung durchgeführt wird. Weiterhin ist es denkbar, dass Teilträger bei einem Ansetzen aneinander fest miteinander verbunden werden.

### Bezugszeichen

- 10: Hausgerät
- 12: Hausgeräteinduktionsheizvorrichtung
- 14: Kochfeldplatte
- 16: Induktionsheizleitung
- 18: Spulenabschnitt
- 19: Spulenabschnitt
- 20: Spulenträger
- 21: Klebstoff
- 22: Bündelungseinheit
- 24: Bündelungselement
- 27: Klemmstelle
- 28: Sperrwand
- 30: Teilträger
- 31: Trägerkern
- 32: Eintrittsöffnung
- 34: Trägerfläche
- 35: Ausformung
- 36: Langloch
- 37: Befestigungspunkt
- 38: Sensoraufnahme
- 39: Loch
- 40: Teilträger
- 41: Trägerkern
- 42: Eintrittsöffnung
- 43: Unterbrechung
- 44: Trägerfläche
- 45: Ausformung
- 46: Langloch
- 47: Ring
- 48: Ringabschnitt
- 49: Verstärkungsstrebe

## Patentansprüche

1. Hausgeräteinduktionsheizvorrichtung, insbesondere Kochfeldinduktionsheizvorrichtung, mit zumindest einer Induktionsheizleitung (16), die zumindest einen dichtgewickelten inneren Spulenabschnitt (18) und zumindest einen äußeren Spulenabschnitt (19) ausbildet, wobei der innere Spulenabschnitt und der äußere Spulenabschnitt durch einen Übergangsbereich, der eine Breite von zumindest 0,5 cm aufweist, voneinander getrennt sind, und wobei in dem Übergangsbereich maximal eine Windung der Induktionsheizleitung liegt, und einem Spulenträger (20), der dazu vorgesehen ist, die Induktionsheizleitung (16) zu tragen, wobei der Spulenträger (20) zumindest einen inneren Trägerkern (31) aufweist, um den die Induktionsheizleitung (16) gewickelt ist, um den inneren Spulenabschnitt (18) zu bilden, **dadurch gekennzeichnet, dass** der Spulenträger (20) **von** zumindest zwei Teilträgern (30, 40) gebildet ist.

2. Hausgeräteinduktionsheizvorrichtung nach Anspruch 1, **dadurch gekennzeichnet, dass** der Spulenträger (20) zumindest einen äußeren Trägerkern (41) aufweist, um den die Induktionsheizleitung (16) gewickelt ist, um den äußeren Spulenabschnitt (19) zu bilden.

3. Hausgeräteinduktionsheizvorrichtung nach einem der vorhergehenden Ansprüche, **dadurch gekennzeichnet, dass** der äußere Spulenabschnitt (19) dicht gewickelt ist.

4. Hausgeräteinduktionsheizvorrichtung nach einem der vorhergehenden Ansprüche, **dadurch gekennzeichnet, dass** der innere Spulenabschnitt (18) und der äußere Spulenabschnitt (19) auf unterschiedlichen Teilträgern (30, 40) angeordnet sind.

5. Hausgeräteinduktionsheizvorrichtung nach einem der vorhergehenden Ansprüche, **dadurch gekennzeichnet, dass** leitende Bestandteile der Induktionsheizleitung (16) zumindest im Wesentlichen aus Aluminium gebildet sind.

6. Hausgerätevorrichtung nach einem der vorhergehenden Ansprüche, **dadurch gekennzeichnet, dass** die Induktionsheizleitung (16) zumindest im Bereich des inneren Spulenabschnitts (18, 19) zumindest abschnittsweise mittels eines Klebstoffs (21) an dem Spulenträger (20) fixiert ist.

7. Hausgerät, insbesondere Induktionskochfeld, mit einer Hausgeräteinduktionsheizvorrichtung (12, 12', 12", 12"') nach einem der vorhergehenden Ansprüche.

8. Verfahren zur Herstellung einer Hausgeräteinduktionsheizvorrichtung (12, 12', 12", 12"') nach einem der Ansprüche 1 bis 6, mit zumindest einer Induktionsheizleitung (16), die zumindest einen dichtgewickelten inneren Spulenabschnitt (18) und zumindest einen äußeren Spulenabschnitt (19) ausbildet, wobei der innere Spulenabschnitt und der äußere Spulenabschnitt durch einen Übergangsbereich, der eine Breite von zumindest 0,5 cm aufweist, voneinander getrennt werden, und wobei in dem Übergangsbereich maximal eine Windung der Induktionsheizleitung liegt, und einem Spulenträger (20), der dazu vorgesehen ist, die Induktionsheizleitung (16) zu tragen, wobei der Spulenträger (20) zumindest einen inneren Trägerkern (31) aufweist, um den die Induktionsheizleitung (16) gewickelt wird, um den inneren Spulenabschnitt (18) zu bilden, **dadurch gekennzeichnet, dass** der Spulenträger (20) von zumindest zwei Teilträgern (30, 40) gebildet wird.

9. Verfahren nach Anspruch 8, **dadurch gekennzeichnet, dass** die Induktionsheizleitung (16) auf den Trägerkern (31) des ersten Teilträgers (30) gewickelt wird, anschließend der zweite Teilträger (40) an den ersten Teilträger (30) angesetzt wird und die Induktionsheizleitung (16) auf den zweiten Teilträger (40) gewickelt wird.

## Claims

1. Domestic appliance induction heating apparatus, in particular hob induction heating apparatus, with at least one induction heating line (16) which embodies at least one tightly wound inner coil segment (18) and at least one outer coil segment (19), wherein the inner coil segment and the outer coil segment are separated from one another by a transition region, which has a width of at least 0.5 cm, and wherein a maximum of one winding of the induction heating line is located in the transition region, and a coil carrier (20), which is provided to carry the induction heating line (16), wherein the coil carrier (20) has at least one inner carrier core (31), about which the induction heating line (16) is wound in order to form the inner coil segment (18), **characterised in that** the coil carrier (20) is formed by at least two partial carriers (30, 40).

2. Domestic appliance induction heating apparatus according to claim 1, **characterised in that** the coil carrier (20) has at least one outer carrier core (41), about which the induction heating line (16) is wound in order to form the outer coil segment (19).

3. Domestic appliance induction heating apparatus according to one of the preceding claims, **characterised in that** the outer coil segment (19) is tightly wound.

4. Domestic appliance induction heating apparatus according to one of the preceding claims, **characterised in that** the inner coil segment (18) and the outer coil segment (19) are arranged on different partial carriers (30, 40).

5. Domestic appliance induction heating apparatus according to one of the preceding claims, **characterised in that** conducting components of the induction heating line (16) are at least essentially formed of aluminium.

6. Domestic appliance induction heating apparatus according to one of the preceding claims, **characterised in that** the induction heating line (16), at least in the region of the inner coil segment (18, 19), is fixed to the coil carrier (20) by means of an adhesive (21) at least in sections.

7. Domestic appliance, in particular induction hob, with a domestic appliance induction heating apparatus (12, 12', 12", 12"') according to one of the preceding claims.

8. Method for producing a domestic appliance induction heating apparatus (12, 12', 12", 12"') according to one of claims 1 to 6, with at least one induction heating line (16) which embodies at least one tightly wound inner coil segment (18) and at least one outer coil segment (19), wherein the inner coil segment and the outer coil segment are separated from one another by a transition region, which has a width of at least 0.5 cm, and wherein a maximum of one winding of the induction heating line is located in the transition region, and a coil carrier (20), which is provided to carry the induction heating line (16), wherein the coil carrier (20) has at least one inner carrier core (31), about which the induction heating line (16) is wound in order to form the inner coil segment (18), **characterised in that** the coil carrier (20) is formed by at least two partial carriers (30, 40).

9. Method according to claim 8, **characterised in that** the induction heating line (16) is wound on the carrier core (31) of the first partial carrier (30), then the second partial carrier (40) is placed on the first partial carrier (30) and the induction heating line (16) is wound on the second partial carrier (40).

## Revendications

1. Dispositif de chauffage par induction à usage ménager, notamment dispositif de chauffage par induction pour plaque de cuisson, comprenant au moins une ligne de chauffage par induction (16) qui forme au moins une section de bobine (18) intérieure enroulée de manière serrée et au moins une section de bobine (19) extérieure, la section de bobine intérieure et la section de bobine extérieure étant séparées l'une de l'autre par une zone de transition qui présente une largeur d'au moins 0,5 cm, et au maximum un enroulement de la ligne de chauffage par induction étant situé dans la zone de transition, et comprenant un support de bobine (20) qui est ménagé pour porter la ligne de chauffage par induction (16), le support de bobine (20) présentant au moins un noyau de support (31) interne autour duquel est enroulée la ligne de chauffage par induction (16) afin de former la section de bobine (18) intérieure, **caractérisé en ce que** le support de bobine (20) est formé par au moins deux supports partiels (30, 40).

2. Dispositif de chauffage par induction à usage ménager selon la revendication 1, **caractérisé en ce que** le support de bobine (20) présente au moins un noyau de support (41) extérieur autour duquel est enroulée la ligne de chauffage par induction (16) afin de former la section de bobine (19) extérieure.

3. Dispositif de chauffage par induction à usage ménager selon l'une quelconque des revendications précédentes, **caractérisé en ce que** la section de bobine (19) extérieure est enroulée de manière serrée.

4. Dispositif de chauffage par induction à usage ménager selon l'une quelconque des revendications précédentes, **caractérisé en ce que** la section de bobine (18) intérieure et la section de bobine extérieure (19) sont disposées sur différents supports partiels (30, 40).

5. Dispositif de chauffage par induction à usage ménager selon l'une quelconque des revendications précédentes, **caractérisé en ce que** des composants conducteurs de la ligne de chauffage par induction (16) sont formés au moins essentiellement en aluminium.

6. Dispositif de chauffage par induction à usage ménager selon l'une quelconque des revendications précédentes, **caractérisé en ce que** la ligne de chauffage par induction (16), au moins dans la partie de la section de bobine (18, 19) intérieure, est fixée sur le support de bobine (20) au moins par sections au moyen d'un adhésif (21).

7. Appareil ménager, notamment plaque de cuisson par induction, comprenant un dispositif de chauffage par induction à usage ménager (12, 12', 12", 12"') selon l'une quelconque des revendications précédentes.

8. Procédé de fabrication d'un dispositif de chauffage par induction à usage ménager (12, 12', 12", 12"') selon l'une quelconque des revendications 1 à 6, comprenant au moins une ligne de chauffage par induction (16) qui forme au moins une section de bobine (18) intérieure enroulée de manière serrée et au moins une section de bobine (19) extérieure, la section de bobine intérieure et la section de bobine extérieure étant séparées l'une de l'autre par une zone de transition qui présente une largeur d'au moins 0,5 cm, et au maximum un enroulement de la ligne de chauffage par induction étant situé dans la zone de transition, et comprenant un support de bobine (20) qui est ménagé pour porter la ligne de chauffage par induction (16), le support de bobine (20) présentant au moins un noyau de support (31) interne autour duquel est enroulée la ligne de chauffage par induction (16) afin de former la section de bobine (18) intérieure, **caractérisé en ce que** le support de bobine (20) est formé par au moins deux supports partiels (30, 40).

9. Procédé selon la revendication 8, **caractérisé en ce que** la ligne de chauffage par induction (16) est enroulée sur le noyau de support (31) du premier support partiel (30), **en ce qu'**ensuite le deuxième support partiel (40) est appliqué contre le premier support (30) et **en ce que** la ligne de chauffage par induction (16) est enroulée sur le deuxième support partiel (40).
